# EUROPÄISCHE PATENTANMELDUNG

(11) **EP 2 883 639 A1**
(43) Veröffentlichungstag der Anmeldung: **17.06.2015**
(21) Anmeldenummer: 13005732.6
(22) Anmeldetag: 10.12.2013
(51) Int. Cl.: B23B 47/28, B28D 1/04, B28D 7/00

(54) **Verfahren und Vorrichtung zum Einbringen einer Anschlussbohrung in eine Wand eines Fermenterbehälters einer Biogasanlage**

(71) Anmelder: Niederbacher, Michael, 39031 Bruneck (IT)
(72) Erfinder: Niederbacher, Michael, 39031 Bruneck (IT)
(74) Vertreter: Liebl, Thomas

(57) **Zusammenfassung**

Die Erfindung betrifft ein Verfahren und eine Vorrichtung zum Einbringen einer Anschlussbohrung in eine Wand, vorzugsweise in eine Betonwand, eines Fermenterbehälters einer Biogasanlage. Erfindungsgemäß wird ein Rohrstutzen (4) an der Außenseite der Wand angeordnet, wobei am Rohrstutzen (4) ein Absperrschieber (6) angeschlossen wird, an den wiederum ein äußeres Aufnahmerohr (7) einer Kernbohrmaschine (8) angeschlossen wird. Eine Bohrkrone der Kernbohrmaschine (8) ist im äußeren Aufnahmerohr (7) aufgenommen und wird mittels der Betätigungseinrichtung aus dem äußeren Aufnahmerohr (7) ausgeschoben, wobei eine wandseitige Kernbohrung hergestellt wird zur Ausbildung der wandseitigen Anschlussbohrung. Nach Rückzug der Bohrkrone und Schließen des Absperrschiebers kann das äußere Aufnahmerohr (7) mitsamt der Kernbohrmaschine (8) abmontiert und entfernt werden, so dass dann am Ausgang des Absperrschiebers (6) ein öffenbarer Anschluss zur Verfügung steht.

## Beschreibung

Die Erfindung betrifft ein Verfahren zum Einbringen einer Anschlussbohrung in eine Wand eines Fermenterbehälters einer Biogasanlage nach dem Oberbegriff des Anspruchs 1 sowie eine entsprechende Vorrichtung nach dem Oberbegriff des Anspruchs 5.

Bei Nachrüstungen, Ergänzungen, Erweiterungen, etc. von Biogasanlagen kommt es regelmäßig vor, dass Anschlussbohrungen durch eine als Betonwand ausgebildete Wand eines Fermenterbehälters für eine Gasentnahme, für eine Substratausleitung oder zur Einbringung von Funktionselementen erforderlich sind. Solche Anschlussbohrungen werden in an sich bekannter Weise regelmäßig mit Kernbohrmaschinen hergestellt, wobei mit einer Bohrkrone ein Bohrkern aus der Betonwand herausgebohrt wird. Ersichtlich kann eine solche bekannte Kernbohrung, bei der nach dem Bohrvorgang die Kernbohrmaschine vom Bohrloch wieder entfernt wird, nur durchgeführt werden, wenn der Fermenter nicht in Betrieb ist, da durch das Bohrloch nach dem Entfernen der Kernbohrmaschine je nach Lage des Bohrlochs Gas ausströmen oder Substrat auslaufen würde. Übliche Anschlussdurchmesser bei Biogasanlagen liegen bei DN 250 bis 300 und sind damit so groß, dass eine übliche Kernbohrung während eines Fermenterbetriebs nicht möglich ist. Somit ist für die Herstellung nachträglicher Anschlussbohrungen in eine Betonwand sowohl in eine Seitenwand als auch eine Deckenwand eines Fermenterbehälters der Biogasanlagenbetrieb zu unterbrechen und der Fermenterbehälter gegebenenfalls bis unter die Höhe der Anschlussbohrung zu entleeren, was einen erheblichen Aufwand und Kosten verursacht.

Aufgabe der Erfindung ist es demgegenüber, ein Verfahren zum Einbringen einer Anschlussbohrung in eine Betonwand eines Fermenterbehälters einer Biogasanlage vorzuschlagen, mit dem es möglich ist, eine solche Anschlussbohrung während eines Fermenterbetriebs einzubringen. Eine weitere Aufgabe der Erfindung ist es, eine Vorrichtung vorzuschlagen, mit der ein solches Verfahren durchführbar ist.

Die Aufgabe der Erfindung wird hinsichtlich des Verfahrens mit den Merkmalen des Anspruchs 1 gelöst.

Dieses Verfahren ist dadurch gekennzeichnet, dass in einem ersten Verfahrensschritt ein Rohrstutzen vorzugsweise mit einem frontseitigen Flansch, an der vorgesehenen Stelle für die Anschlussbohrung, vorzugsweise dicht, an der Außenseite der Wand bzw. Betonwand angebracht wird. Der optionale frontseitige Rohrflansch, der zum Beispiel durch eine Edelstahlplatte gebildet sein kann, wird zuerst an der Behälterwand mittels eines Befestigungsmittels befestigt, zum Beispiel dort angedübelt, und mit einem Dichtmittel abgedichtet. Dann erst werden die Befestigungsmittel, zum Beispiel Schlagdübel, angezogen.

An dem wandabgewandten freien Ende des Rohrstutzens ist oder wird weiter ein Absperrschieber, vorzugsweise dicht, angeschlossen, an den wiederum ein äußeres Aufnahmerohr einer Kernbohrmaschine, vorzugsweise dicht, angeschlossen ist oder wird. Bevorzugt kann hierbei der Absperrschieber und/oder das äußere Aufnahmerohr koaxial zum Rohrstutzen ausgebildet sein und/oder kann der Absperrschieber und/oder das äußere Aufnahmerohr wenigstens bezüglich des Innendurchmessers durchmesserangepasst zum Rohrstutzen ausgebildet sein.

Eine Bohrkrone der Kernbohrmaschine ist in einer Ausgangsstellung drehbar und verschiebbar im äußeren Aufnahmerohr aufgenommen, wobei die Bohrkrone zur Drehbetätigung und Verschiebung mittels einer Betätigungseinrichtung, vorzugsweise mittels einer von außen her, bevorzugt dicht, in das äußere Aufnahmerohr geführten Antriebswelle einer Betätigungseinrichtung, gekoppelt ist. Zum Beispiel kann vorgesehen sein, dass das Aufnahmerohr endseitig, das heißt gegenüberliegend zum Rohrstutzen, mit einem Abdeckelement, zum Beispiel einer Abdeckplatte, verschlossen, insbesondere dicht verschlossen ist, durch das, vorzugsweise dicht, eine mit der Bohrkrone verbundene Antriebswelle der Betätigungseinrichtung drehbar und verschiebbar geführt sein kann. Der Rohrstutzen, der Absperrschieber und das Aufnahmerohr der Kernbohrmaschine können bereits vor dem Anschluss des Rohrstutzens an der Wand vormontiert sein. Zweckmäßig kann der Rohrstutzen aber separat an der Wand angebracht und erst dann der Absperrschieber und das Aufnahmerohr angebaut werden.

Nach dem Anbringen der kompletten Einheit aus Rohrstutzen, Absperrschieber und der Kernbohrmaschine mit ihrem Aufnahmerohr wird in einem weiteren Verfahrensschritt bei geöffnetem Absperrschieber die Bohrkrone mittels der Betätigungseinrichtung, zum Beispiel durch ein von außen durchgeführtes Verschieben einer Antriebswelle, aus dem Aufnahmerohr ausgeschoben und soweit in den Rohrstutzen eingeschoben, bis die Bohrkrone an der Wand zur Anlage kommt, zum Beispiel bis die Schneidelemente der Bohrkrone an der Wandaußenseite anliegen. Um dies zu ermöglichen weist die Antriebswelle mindestens eine Länge entsprechend der erforderlichen Ausschiebestrecke auf.

In einem weiteren Verfahrensschritt wird dann, zum Beispiel mittels eines Motorantriebs, die Antriebswelle und damit die Bohrkrone drehangetrieben. Zusätzlich wird durch eine Schubkraft auf die Antriebswelle mittels der Bohrkrone eine Kernbohrung als Anschlussbohrung durch die Betonwand durchgeführt. Dabei kann gegebenenfalls der Bohrkern im Wesentlichen in der Bohrkrone aufgenommen werden, insbesondere wenn die Kernbohrung in horizontaler Richtung an einer Fermenterseitenwand durchgeführt wird.

In einem weiteren Verfahrensschritt wird dann die Bohrkrone mittels der Betätigungseinrichtung wieder in das äußere Aufnahmerohr zurückgezogen und der Absperrschieber geschlossen. Beispielsweise kann hierbei die Bohrkrone - gegebenenfalls mit dem Bohrkern und/oder zum Beispiel durch eine Rückzugkraft auf die Antriebswelle, zweckmäßig in Verbindung mit einer Drehbewegung - wieder vollständig in das Aufnahmerohr zurückgezogen werden. Dabei kann Substrat und/oder Gas aus dem Fermenterbehälter in und durch den Rohrstutzen sowie durch den geöffneten Absperrschieber in das Aufnahmerohr strömen, wo sich die Bohrkrone gegebenenfalls mit dem Bohrkern befindet. Es kann jedoch nur eine geringe Menge an Substrat und/oder Gas ausströmen, da das Aufnahmerohr, zum Beispiel durch eine endseitige Abdeckplatte als Abdeckelement vorzugsweise dicht verschlossen ist und zum Beispiel die Welle darin durch eine vorzugsweise dichte Lagerung geführt ist.

In einem abschließenden Verfahrensschritt kann dann das äußere Aufnahmerohr mitsamt der Kernbohrmaschine gegebenenfalls abmontiert und entfernt werden, so dass dann am Ausgang des Absperrschiebers ein öffenbarer Anschluss zur Verfügung steht. Das heißt mit anderen Worten, dass in einem letzten Verfahrensschritt dann der Absperrschieber geschlossen ist oder wird, so dass kein weiteres Substrat und/oder Gas nachströmen kann und die daran angeschlossene Kernbohrmaschine bei Bedarf mit ihrem Aufnahmerohr abmontiert werden kann. Lediglich die geringe Menge an Substrat und/oder Gas, die sich gegebenenfalls im Aufnahmerohr angesammelt hat, muss somit entfernt und entsorgt werden. Damit steht am Ausgang des Absperrschiebers ein bedarfsweise öffenbarer Anschluss universell zur Verfügung.

An diesen Anschluss können jedwede geeignete Funktionsgeräte bzw. Rohrleitungen mit oder ohne Funktionsgeräte, beispielsweise Pumpen als Funktionsgeräte, zum Beispiel für eine Gas- oder Substratausleitung, angeschlossen werden. Auch andere Funktionsgeräte, beispielsweise Entnahme- und/oder Zuführeinrichtungen, wie zum Beispiel Schnecken oder Kolbenpressen oder dergleichen, oder Rührgeräte oder Mess- und Analysegeräte, können angeschlossen werden, die in Verbindung mit einem Aufnahmerohr, ähnlich wie die Bohrkrone, insbesondere dicht, in den Fermenter ein- und ausgeschoben werden können. Ganz allgemein gesehen weist ein derartiges Funktionsgerät ein Funktionselement auf, zum Beispiel einen Rührpropeller eines Rührgeräts (gegebenenfalls mit Antriebsmotor), das in einer Ausgangsstellung in einem am Absperrschieber angeflanschten Aufnahmerohr dicht aufgenommen ist, wobei das Funktionselement mit einem Betätigungselement, gegebenenfalls in Form einer von außen her, insbesondere wiederum dicht, in das Aufnahmerohr geführten Antriebswelle, gekoppelt ist, mit der das Funktionselement, zum Beispiel der oben genannte Rührpropeller, bei geöffnetem Absperrschieber durch die Anschlussbohrung in den Fermenterbehälter verlagerbar ist.

Die erfindungsgemäße Aufgabe wird hinsichtlich der Vorrichtung mit den Merkmalen des Anspruchs 5 gelöst.

Erfindungsgemäß wird hier vorgeschlagen,
- dass die Vorrichtung einen Rohrstutzen, vorzugsweise mit einem frontseitigen Flansch, aufweist, der an der Außenseite einer Wand eines Fermenterbehälters einer Biogasanlage, vorzugsweise dicht, anflanschbar ist,
- dass an dem wandabgewandten freien Ende des Rohrstutzens ein Absperrschieber, vorzugsweise dicht, angebracht ist, insbesondere koaxial und dicht angebracht ist,
- dass an den Absperrschieber ein äußeres Aufnahmerohr einer Kernbohrmaschine, vorzugsweise mit in etwa gleichem Innendurchmesser wie der Rohrstutzen, lösbar montiert ist,
- dass im äußeren Aufnahmerohr eine, vorzugsweise dem Innendurchmesser des Aufnahmerohrs angepasste, Bohrkrone angeordnet ist, die mit einer Betätigungseinrichtung gekoppelt ist, vorzugsweise endseitig zentral und koaxial mit einer Antriebswelle einer Betätigungseinrichtung verbunden ist.

Wie bereits in Verbindung mit dem vorstehenden Verfahren ausgeführt, besteht die Vorrichtung somit aus einem Rohrstutzen, zum Beispiel mit einem frontseitigen Flansch, einem mit dem Rohrstutzen, vorzugsweise dicht, verbundenen Absperrschieber und einem daran angeschlossenen Aufnahmerohr einer Kernbohrmaschine. Im Aufnahmerohr ist eine Bohrkrone drehbar und in Richtung des Rohrstutzens verschiebbar, wobei die Bohrkrone mit einer Betätigungseinrichtung gekoppelt ist, zum Beispiel mit einer Antriebswelle, welche an einem endseitigen Abdeckelement des Aufnahmerohrs geführt ist. Die Antriebswelle kann unmittelbar oder mittelbar mit einem Drehantriebsmotor verbunden und mindestens so lang sein, dass die daran angeschlossene Bohrkrone durch den Absperrschieber, durch den Rohrstutzen und noch durch die Dicke der Wand verschoben werden kann.

Mit einer solchen Vorrichtung kann, wie vorstehend ausgeführt, vorteilhaft und einfach zu handhaben, eine Kernbohrung auch bei einem mit Substrat gefüllten Fermenterbehälter ohne Betriebsunterbrechung durch eine Wand bzw. Betonwand des Fermenterbehälters durchgeführt werden.

Da der Absperrschieber auch nach der Kernbohrung weiter dicht am Rohrstutzen verbleibt, kann der Rohrstutzen integral mit dem Absperrschieber verbunden sein. Der Absperrschieber hat dann hier einen rohrförmigen Eingang, der mit einem frontseitigen Flansch unmittelbar an der Wand angebracht wird. Zweckmäßig kann als Absperrschieber aber ein handelsübliches Kaufteil mit beidseitigen Flanschen verwendet werden, wobei dann der Rohrstutzen zusätzlich zu einer frontseitigen Flanschplatte einen gegenüberliegenden Anschlussflansch für den Absperrschieber aufweist. Die erforderliche lösbare Verbindung zwischen dem Absperrschieber und dem Aufnahmerohr der Kernbohrmaschine wird einfach und zweckmäßig ebenfalls durch Verbindungsflansche realisiert.

Die Bohrkrone wird in einer konstruktiv geeigneten Form als Kreiszylinderabschnitt ausgebildet, der frontseitig in Richtung auf den Rohrstutzen hin offen ist und am Öffnungsrand Schneidelemente, insbesondere aus Hartmetallteilen oder Diamantsplittern aufweist. Gegenüberliegend zu dieser Öffnung weist die Bohrkrone ein Wandteil auf, an dem die Antriebswelle zentral fest angeschlossen ist. Die Bohrkrone soll mindestens eine axiale Länge entsprechend der Dicke der zu bohrenden Wand aufweisen, so dass in der Bohrkrone gegebenenfalls der Bohrkern aufgenommen werden kann.

In einer weiteren konstruktiven Ausgestaltung weist die Kernbohrmaschine eine mit dem Aufnahmerohr fest verbundene Führungsschiene auf, die achsparallel zur Antriebswelle verläuft. An der Führungsschiene ist in einer Schlittenführungsnut ein Schlittenteil verschiebbar gehalten, wobei mit dem Schlittenteil der Antriebsmotor für einen Drehantrieb der Antriebswelle verbunden ist. Der Antriebsmotor ist endseitig mit der Antriebswelle verbunden und kann zusammen mit der Antriebswelle an der Führungsschiene verschoben werden. Die Drehmomentabstützung für das Bohrkronendrehmoment kann somit hier im Schlitten und in der Führungsschiene aufgenommen und abgestützt werden. Zur Aufbringung der linearen Schubkraft auf die Bohrkrone bzw. deren Antriebswelle kann am Schlitten und/oder am Antriebsmotor ein Handgriff für eine lineare Schubkraft entlang der Führungsschiene angebracht sein. Alternativ oder zusätzlich kann auch ein Linearantriebsmotor zusätzlich zum Drehantriebsmotor vorgesehen sein und insbesondere mit dem Schlitten verbunden werden. Zweckmäßig können dabei der Drehantrieb und der Linearantrieb in einem Antriebsmotor integriert sein.

Die erfindungsgemäße Vorrichtung wird bevorzugt rechtwinklig abstehend an der Wand angebracht, kann gegebenenfalls aber auch schräg abstehend angeordnet werden. In letzterem Fall könnte dann zum Beispiel ein Rohrstutzen entsprechend winklig bzw. schräg verlaufend an der Wand angesetzt werden.

Anhand einer Zeichnung wird die Erfindung weiter erläutert.

Es zeigen:
- Fig. 1: eine schematische Darstellung einer Vorrichtung zum Einbringen einer Anschlussbohrung in eine zum Beispiel als Betonwand ausgeführte Wand eines Fermenterbehälters einer Biogasanlage,
- Fig. 2: einen Längsschnitt durch eine modifizierte Ausführungsform der Vorrichtung nach Fig. 1 in einer Ausgangsstellung,
- Fig. 3: die Vorrichtung nach Fig. 2 in einer Bohrposition, und
- Fig. 4: die Vorrichtung nach Fig. 2 in einer demontierten Position nach Durchführung des Bohrvorgangs mit bereits angeschlossenem Rührgerät.

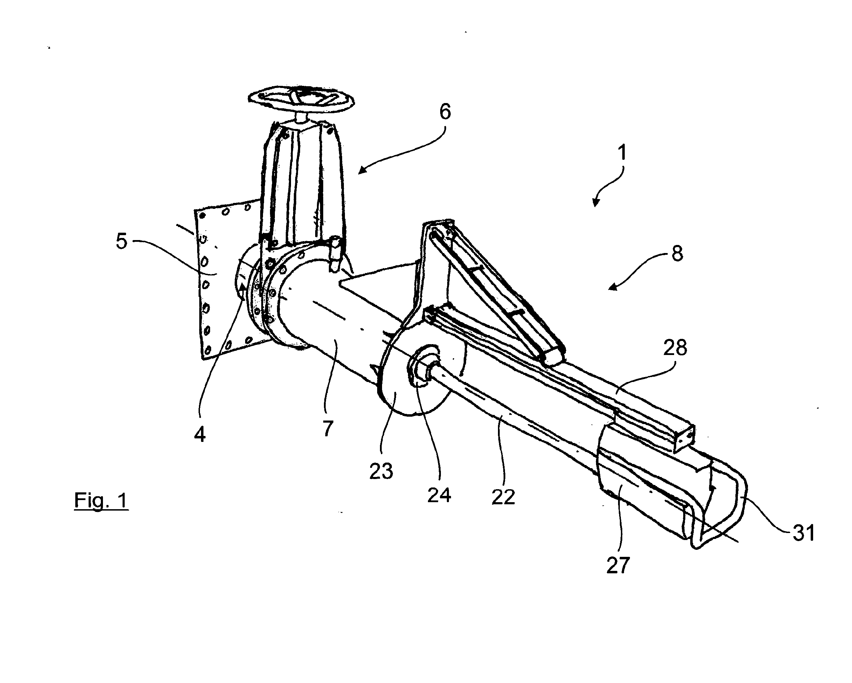

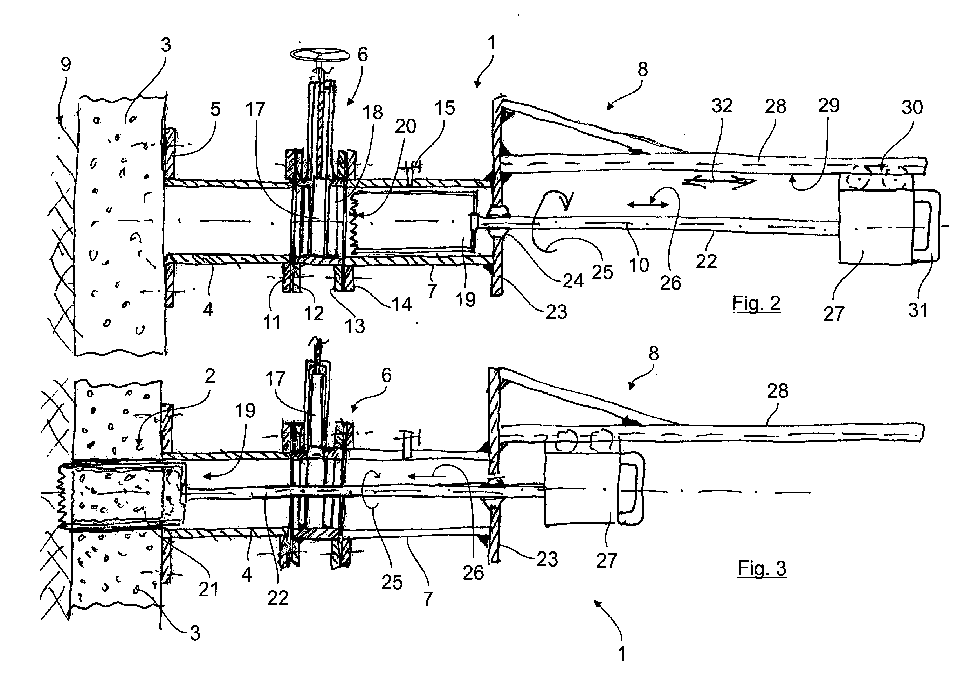

In Fig. 1 ist eine Vorrichtung 1 dargestellt zur Durchführung eines Verfahrens zum Einbringen einer Anschlussbohrung 2 in eine zum Beispiel Betonwand 3 eines Fermenterbehälters einer Biogasanlage. Die Vorrichtung 1 besteht dabei aus einem Rohrstutzen 4 mit einem frontseitigen Flansch 5, einem daran anschließenden Absperrschieber 6 und ein diesem koaxial nachgeordneten Aufnahmerohr 7 einer Kernbohrmaschine 8. Der frontseitige Flansch 5 des Rohrstutzens 4, der hier bevorzugt als Edelstahlplatte ausgebildet ist, wird mit einer Dichtungsmasse an der Betonwand 3 angedübelt, wo die Anschlussbohrung hergestellt werden soll. Weitere Details sowie die Durchführung des Verfahrens werden anhand der weiter konkretisierten Schnittdarstellungen entsprechend der Fig. 2 bis 4 erläutert:

In der Längsschnittdarstellung nach Fig. 2 ist, ebenso wie in Fig. 1, die Ausgangsstellung der Vorrichtung 1 bzw. der Kernbohrmaschine 8 gezeigt, wobei diese bereits horizontal mit dem frontseitigen Flansch 5 beispielhaft an eine seitliche Betonwand 3 eines dort mit Substrat 9 gefüllten Fermenterbehälters einer Biogasanlage dicht angedübelt worden ist. Entsprechend wäre auch eine vertikale Anbringung der Vorrichtung 1 an einer Deckenwand eines Fermenterbehälters über einem Gasvolumen möglich. Auch eine Schräganordnung wäre grundsätzlich möglich, wie bereits zuvor erläutert.

Die Vorrichtung 1 steht somit in der beispielhaft gezeigten Anordnung mit ihrer Achse 10 etwa rechtwinklig von der Betonwand 3 ab. Gegenüberliegend zum frontseitigen Flansch 5 ist der Rohrstutzen 4 mit einem weiteren Verbindungsflansch 11 ausgerüstet, an den sich mit einem weiteren Verbindungsflansch 12 der Absperrschieber 6 anschließt, der zudem mit einem weiteren Verbindungsflansch 13 und einem Aufnahmerohrflansch 14 mit dem Aufnahmerohr 7 der Kernbohrmaschine 8 verbunden ist. Die Verbindung zwischen dem Aufnahmerohrflansch 14 und dem Verbindungsflansch 13 des Absperrschiebers 6 ist zur Durchführung des weiter beschriebenen Bohrverfahrens lösbar und demontierbar auszuführen. Am Aufnahmerohr 7 ist zudem eine Zuführeinrichtung 15 für eine Spülflüssigkeit, zum Beispiel ein Anschlussnippel 15 für eine Spülflüssigkeit, vorgesehen. Die Spülflüssigkeit kann alternativ oder zusätzlich auch an einer anderen Stelle zugeführt werden. So kann die Spülflüssigkeit zum Beispiel auch am Rohrstutzen 4 in analoger Weise über eine Zuführeinrichtung, zum Beispiel einen Anschlussnippel, zugeführt werden und/oder entlang oder durch die nachfolgend noch näher beschriebene Antriebswelle 22 zugeführt werden. Damit kann zum Beispiel eine insbesondere bei gasführenden Fermenterbehältern kritische Funkenbildung zuverlässig vermieden werden.

Der Absperrschieber 6 weist eine mittels eines Spindeltriebs 16 von einer Geschlossenstellung (Fig. 2) in eine Offenstellung (Fig. 3) verlagerbare Schieberplatte 17 auf, die in Führungen 18 geführt und gehalten ist. In der Offenstellung der Schieberplatte 17 ist der Ausgang des Absperrschiebers 6 entsprechend dem Innendurchmesser des Rohrstutzens 4 freigegeben und in der Geschlossenstellung der Schieberplatte 17 ist der Ausgang des Rohrstutzens 4 vorzugsweise dicht verschlossen.

Die Kernbohrmaschine 8 enthält im Aufnahmerohr 7 eine Bohrkrone 19, die als Kreiszylinderabschnitt frontseitig offen ausgebildet ist und mit Schneidelementen 20, insbesondere aus Hartmetallteilen oder Diamantsplittern, am Öffnungsrand versehen ist. Die Bohrkrone 19 ist so lang ausgebildet, dass hier zumindest die Länge eines Bohrkerns 21 entsprechend der Wanddicke der Betonwand 3 in der Bohrkrone 19 aufgenommen werden kann. Entsprechend ist auch die Länge des Aufnahmerohrs 7 dimensioniert, so dass die Bohrkrone 19 insgesamt im Aufnahmerohr 7 aufgenommen werden kann.

Die Bohrkrone 19 ist rückseitig zentral und koaxial mit einer Antriebswelle 22 verbunden, die durch eine Abdeckplatte 23 an der Rückseite des Aufnahmerohrs 7 durch eine Wellendichtung 24 drehbar (Pfeil 25) und verschiebbar (Pfeil 26) geführt ist.

Die Antriebswelle 22 ist so lang, dass die Bohrkrone 19 von außen her durch die Wellendichtung 24 bis an die Betonwand 3 heran und beim Bohrvorgang durch die Betonwand 3 hindurch geschoben werden kann (siehe Fig. 3).

Mit der Antriebswelle 2 ist endseitig ein elektrischer Drehantriebsmotor 27 verbunden.

Achsparallel zur Antriebswelle 22 und mit der Abdeckplatte 23 verbunden verläuft eine Führungsschiene 28 mit einer Schlittenführungsnut 29, an der ein Schlittenteil 30 verschiebbar gehalten ist, wobei der Schlittenteil 30 mit dem Drehantriebsmotor 27 verbunden ist. Weiter ist an der Einheit aus dem Schlittenteil 30 und dem Drehantriebsmotor 27 ein Handgriff 31 angebracht für eine handbetätigte Linearverschiebung (Pfeil 32) des Schlittenteils 30 an der Führungsschiene 28.

Die Vorrichtung 1 hat folgende Funktion:
Ausgehend von der in Fig. 2 gezeigten Ausgangsstellung, bei der die Vorrichtung 1 bereits mit dem Flansch 5 an die Betonwand 3 dicht angedübelt ist, wird, wie in Fig. 3 gezeigt, der Absperrschieber 6 geöffnet, die Bohrkrone 19 durch einen Schub auf die Antriebswelle 22 an die Betonwand 3 herangeführt und anschließend die Kernbohrung durchgeführt. Dadurch wird der Bohrkern 21 aus der Betonwand 3 ausgebohrt und in der Bohrkrone 19 aufgenommen.

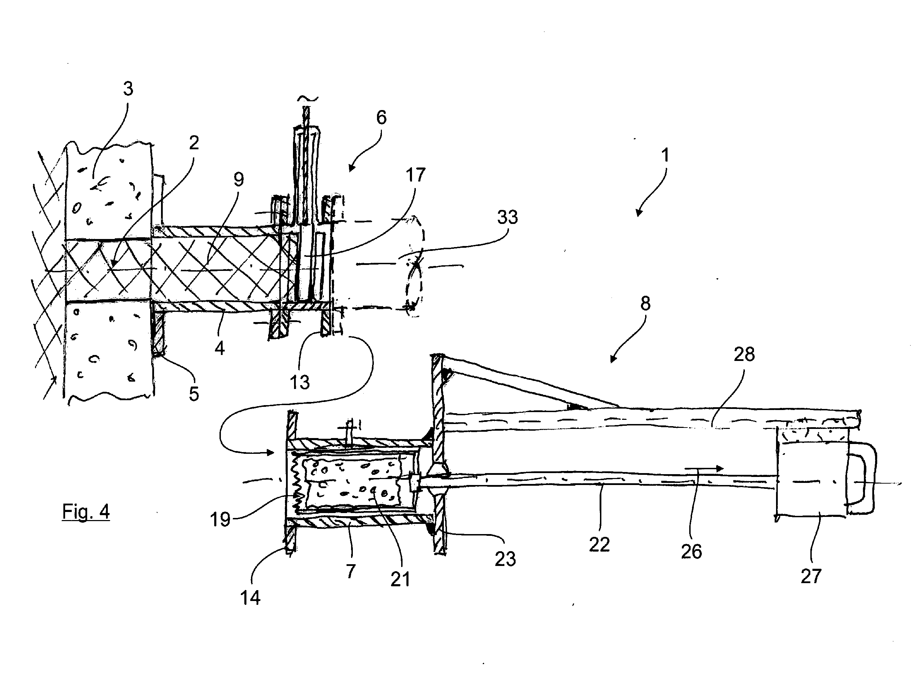

Anschließend wird durch einen Zug auf die Antriebswelle 22 die Bohrkrone 19 mit dem Bohrkern 21 in ihre Ausgangsstellung in das Innere des Aufnahmerohrs 7 zurückgezogen (Fig. 4 unterer Teil) und anschließend der Absperrschieber 6 wieder geschlossen. Dadurch läuft das flüssige Substrat 9 bis zur geschlossenen Schieberplatte 17. Die Kernbohrmaschine 8 kann dann, wie in Fig. 4 gezeigt, durch Öffnen der Flanschverbindung 13, 14 vom Absperrschieber 6 gelöst und abgenommen werden, so dass dann der Verbindungsflansch 13 am Ausgang des Absperrschiebers 6 zum Beispiel für den Anschluss eines Rohrs zur Verfügung steht.

In Fig. 4 (oberer Teil) ist in einer Weiterbildung der Vorrichtung 1 am Verbindungsflansch 13 des Absperrschiebers 6 bereits ein (schematisch dargestelltes) Rührgerät 33 (stellvertretend für jedwedes geeignete Funktionsgerät und/oder Rohrleitung) mit einem Aufnahmerohr 34 angeflanscht. Ein Rührpropeller 36 des Rührgeräts 33 ist mit einer Schubstange 37, gegebenenfalls als Antriebswelle verbunden und in der dargestellten Ausgangsstellung bei geschlossenem Absperrschieber 6 im Aufnahmerohr 34 enthalten. Die Schubstange 37 ist dicht durch eine endseitige Abdeckplatte 35 des Aufnahmerohrs 34 geführt. Nach Öffnen des Absperrschiebers 6 kann der Rührpropeller 36 (und gegebenenfalls ein direkt daneben angebrachter Antriebsmotor) mittels der Schubstange 37 in den Fermenterbehälter eingeschoben werden. Alternativ zu Fig. 4 kann bei einer Kernbohrung durch eine Fermenter-Deckenwand das Rührgerät 33 senkrecht angeordnet sein und der Rührpropeller 36 von oben her durch den Gasraum in das Substrat eingeführt werden.

### Bezugszeichenliste

- 1: Vorrichtung
- 2: Anschlussbohrung
- 3: Betonwand
- 4: Rohrstutzen
- 5: frontseitiger Flansch
- 6: Absperrschieber
- 7: Aufnahmerohr
- 8: Kernbohrmaschine
- 9: Substrat
- 10: Achse
- 11: Verbindungsflansch
- 12: Verbindungsflansch
- 13: Verbindungsflansch
- 14: Aufnahmerohr-Flansch
- 15: Anschlussnippel
- 16: Spindeltrieb
- 17: Schieberplatte
- 18: Führungen
- 19: Bohrkrone
- 20: Schneidelemente
- 21: Bohrkern
- 22: Antriebswelle
- 23: Abdeckplatte
- 24: Wellendichtung
- 25: Pfeil
- 26: Pfeil
- 26: Pfeil
- 27: Drehantriebsmotor
- 28: Führungsschiene
- 29: Schlittenführungsnut
- 30: Schlittenteil
- 31: Handgriff
- 32: Pfeil
- 33: Rührgerät
- 34: Aufnahmerohr
- 35: Abdeckplatte
- 36: Rührpropeller
- 37: Schubstange

## Patentansprüche

1. Verfahren zum Einbringen einer Anschlussbohrung (2) in eine Wand (3), vorzugsweise in eine Betonwand, eines Fermenterbehälters einer Biogasanlage,
**dadurch gekennzeichnet,**
**dass** in einem ersten Verfahrensschritt ein Rohrstutzen (4) an einer definierten und für die Ausbildung einer Anschlussbohrung (2) vorgesehenen Bohrstelle an der Außenseite der Wand (3) angeordnet wird,
**dass** an dem wandabgewandten freien Ende des Rohrstutzens (4) ein Absperrschieber (6) angeschlossen ist oder wird, an den wiederum ein äußeres Aufnahmerohr (7) einer Kernbohrmaschine (8) angeschlossen ist oder wird,
**dass** eine Bohrkrone (19) der Kernbohrmaschine (8) in einer Ausgangsstellung drehbar und verschiebbar im äußeren Aufnahmerohr (7) aufgenommen ist, wobei die Bohrkrone (19) zur Drehbetätigung und Verschiebung mittels einer Betätigungseinrichtung gekoppelt ist,
**dass** die Bohrkrone (19) in einem weiteren Verfahrensschritt, bei geöffnetem Absperrschieber (6), mittels der Betätigungseinrichtung aus dem äußeren Aufnahmerohr (7) ausgeschoben und soweit in den Rohrstutzen (4) eingeschoben wird, bis die Bohrkrone (19) an der Wand (3) zur Anlage kommt, wobei durch Drehbetätigung und Vorschubbewegung der Bohrkrone (19), vorzugsweise mittels eines Motordrehantriebs (27) und/oder eines Schubantriebs (31, 28), eine wandseitige Kernbohrung hergestellt wird zur Ausbildung der wandseitigen Anschlussbohrung (2),
**dass** in einem weiteren Verfahrensschritt die Bohrkrone (19) mittels der Betätigungseinrichtung wieder in das äußere Aufnahmerohr (7) zurückgezogen und der Absperrschieber (6) geschlossen wird, und
**dass** in einem abschließenden Verfahrensschritt das äußere Aufnahmerohr (7) mitsamt der Kernbohrmaschine (8) bei Bedarf abmontiert und entfernt wird oder werden kann, so dass dann am Ausgang des Absperrschiebers (6) ein öffenbarer Anschluss zur Verfügung steht.

2. Verfahren nach Anspruch 1, **dadurch gekennzeichnet, dass** beim Rückzug der Bohrkrone (19) in das äußere Aufnahmerohr (7) Substrat und/oder Gas aus dem Fermenterbehälter in und durch den Rohrstutzen (4) und den geöffneten Absperrschieber (6) in das äußere Aufnahmerohr (7) nachströmt, und dass anschließend der Absperrschieber (6) geschlossen wird.

3. Verfahren nach Anspruch 1 oder 2, **dadurch gekennzeichnet, dass** nach der Kernbohrung und Demontage der Kernbohrmaschine (8) am geschlossenen Absperrschieber (6) ein Funktionsgerät (33) und/oder eine Rohrleitung am Absperrschieber (6), vorzugsweise dicht, anordenbar, insbesondere anflanschbar, ist.

4. Verfahren nach Anspruch 3, **dadurch gekennzeichnet, dass** das Funktionsgerät ein Funktionselement, insbesondere einen Rührpropeller (36) eines Rührgeräts (33), aufweist, das in einer Ausgangsstellung in einem am Absperrschieber (6) angeflanschten Aufnahmerohr (34) des Funktionsgerätes, vorzugsweise dicht, aufgenommen ist, wobei das Funktionselement mit einem Betätigungselement (37) gekoppelt ist, mit der das Funktionselement bei geöffnetem Absperrschieber (6) durch die Anschlussbohrung (2) in den Fermenterbehälter verlagerbar ist.

5. Vorrichtung zum Einbringen einer Anschlussbohrung (2) in eine Wand (3) eines Fermenterbehälters einer Biogasanlage, insbesondere zur Durchführung eines Verfahrens nach einem der vorhergehenden Ansprüche,
**dadurch gekennzeichnet,**
**dass** die Vorrichtung (1) einen Rohrstutzen (4) aufweist, der an der Außenseite (2) einer Wand (3) eines Fermenterbehälters einer Biogasanlage festlegbar, insbesondere anflanschbar, ist,
**dass** an dem wandabgewandten freien Ende des Rohrstutzens (4) ein Absperrschieber (6) angebracht ist,
**dass** an den Absperrschieber (6) ein äußeres Aufnahmerohr (7) einer Kernbohrmaschine (8) lösbar montiert ist,
**dass** im äußeren Aufnahmerohr (7) eine Bohrkrone (19) angeordnet ist, die mit einer Betätigungseinrichtung gekoppelt ist.

6. Vorrichtung nach Anspruch 5, **dadurch gekennzeichnet, dass** eine Antriebswelle (22) der Betätigungseinrichtung drehbar und verschiebbar, vorzugsweise durch eine Wellendichtung (24), an einem endseitigen Abdeckelement (23), insbesondere einer Abdeckplatte, des äußeren Aufnahmerohrs (7) geführt ist und die Antriebswelle (22) endseitig mit einem Drehantriebsmotor (27) verbunden ist, wobei bevorzugt vorgesehen ist, dass die Länge der Antriebswelle (22) mindestens der Länge zwischen dem wandseitigen Ende, insbesondere einem frontseitigen Flansch (5), des Rohrstutzens (4) und dem endseitigen Abdeckelement (23) des Aufnahmerohrs (7) entsprechend einer erforderlichen Ausschiebestrecke für die Bohrkrone (19) entspricht.

7. Vorrichtung nach Anspruch 5 oder 6, **dadurch gekennzeichnet, dass** der Rohrstutzen (4) integral mit dem Absperrschieber (6) verbunden ist oder dass der Rohrstutzen (4) und der Absperrschieber (6) für einen gegenseitigen Anschluss einander zugeordnete Verbindungselemente, insbesondere Verbindungsflansche (11, 12), aufweisen.

8. Vorrichtung nach einem der Ansprüche 5 bis 7, **dadurch gekennzeichnet, dass** die lösbare Verbindung zwischen dem Absperrschieber (6) und dem äußeren Aufnahmerohr (7) durch zwei einander zugeordnete Verbindungselemente, insbesondere Verbindungsflansche (12, 13), realisiert ist.

9. Vorrichtung nach einem der Ansprüche 5 bis 8, **dadurch gekennzeichnet, dass** die Bohrkrone (19) als Kreiszylinderabschnitt ausgebildet ist, der frontseitig offen ist und am Öffnungsrand Schneidelemente (20), insbesondere aus Hartmetallteilen und/oder Diamantsplittern, aufweist, und der gegenüberliegend zur Öffnung ein Wandteil aufweist, an das die Antriebswelle (22) zentral fest angeschlossen ist,
dass die Bohrkrone (19) mindestens eine axiale Länge hat, die der Dicke einer Wand (3) entspricht, in der eine Kernbohrung (2) eingebracht werden soll und auch das äußere Aufnahmerohr (7) eine entsprechende Länge aufweist, so dass die Bohrkrone (19) mit ihrer gesamten Länge in das Aufnahmerohr (7) einschiebbar ist.

10. Vorrichtung nach einem der Ansprüche 5 bis 9, **dadurch gekennzeichnet, dass** die Kernbohrmaschine (8) eine mit dem äußeren Aufnahmerohr (7) fest verbundene Führungsschiene (28) aufweist, die achsparallel zu einer Antriebswelle (22) der Betätigungseinrichtung verläuft,
dass an der Führungsschiene (28) in einer Schlittenführungsnut (29) ein Schlittenteil (30) verschiebbar gehalten ist, mit dem ein Antriebsmotor (27) der Betätigungseinrichtung für einen Drehantrieb der Antriebswelle (22) verbunden ist.

11. Vorrichtung nach Anspruch 10, **dadurch gekennzeichnet, dass** der Schlitten (30) und/oder der Antriebsmotor (27) einen Handgriff (31) für eine Handbetätigung zu einer linearen Schubkraft entlang der Führungsschiene (28) aufweist.

12. Vorrichtung nach Anspruch 10 oder 11, **dadurch gekennzeichnet, dass** der Antriebsmotor (27) zusätzlich zum Drehantrieb einen Linearantrieb aufweist für eine motorische Schubkraft bei der Kernbohrung.

13. Vorrichtung nach einem der Ansprüche 5 bis 12, **dadurch gekennzeichnet, dass** nach der Kernbohrung und Demontage der Kernbohrmaschine (8) am geschlossenen Absperrschieber (6) ein Funktionsgerät (33) und/oder eine Rohrleitung am Absperrschieber (6) anordenbar, insbesondere anflanschbar, ist.

14. Vorrichtung nach Anspruch 13, **dadurch gekennzeichnet, dass** das Funktionsgerät ein Funktionselement, insbesondere einen Rührpropeller (36) eines Rührgeräts (33), aufweist, das in einer Ausgangsstellung in einem am Absperrschieber (6) angeflanschten Aufnahmerohr (34) des Funktionsgerätes dicht aufgenommen ist, wobei das Funktionselement mit einem Betätigungselement (37) gekoppelt ist, mit der das Funktionselement bei geöffnetem Absperrschieber (6) durch die Anschlussbohrung (2) in den Fermenterbehälter verlagerbar ist.

15. Vorrichtung nach einem der Ansprüche 5 bis 14, **dadurch gekennzeichnet, dass** die Vorrichtung (1) eine Zuführeinrichtung (15) für Spülflüssigkeit aufweist, insbesondere im Bereich des Rohrstutzens (4) und/oder im Bereich des äußeren Aufnahmerohrs (7) und/oder durch oder entlang einer Antriebswelle (22) der Betätigungseinrichtung ein Anschluss für die Zuführung von Spülflüssigkeit vorgesehen ist.
